# EUROPEAN PATENT SPECIFICATION

(11) **EP 4 368 425 B1**
(45) Date of publication and mention of the grant of the patent: **02.07.2025**
(21) Application number: 21951372.8
(22) Date of filing: 30.07.2021
(51) Int. Cl.: B60H 1/00, B60H 1/14, B60H 1/22, B60H 1/32

(54) **THERMAL MANAGEMENT SYSTEM AND VEHICLE**
WÄRMEVERWALTUNGSSYSTEM UND FAHRZEUG
SYSTÈME DE GESTION THERMIQUE ET VÉHICULE

(43) Date of publication of application: 15.05.2024
(73) Proprietor: Shenzhen Yinwang Intelligent Technologies Co., Ltd., Shenzhen, Guangdong 518129 (CN)
(72) Inventor: ZHANG, Kexin, Shenzhen, Guangdong 518129 (CN); HU, Haomang, Shenzhen, Guangdong 518129 (CN)
(74) Representative: Pfenning, Meinig & Partner mbB
(86) International application number: PCT/CN2021/109728
(87) International publication number: WO 2023/004782

(56) References cited:
- CN-A- 103 090 463
- CN-A- 107 757 298
- CN-A- 110 154 683
- CN-A- 112 248 757
- CN-A- 112 810 402
- DE-A1- 102019 121 519
- JP-A- H01 210 772
- US-A- 5 355 690
- US-A1- 2016 075 212
- US-A1- 2020 361 279

## Description

### TECHNICAL FIELD

This disclosure generally relates to the field of electric vehicles, and the invention in particular relates to a thermal management system, a method for controlling a thermal management system, a vehicle, and a computer-readable storage medium.

### BACKGROUND

Electric vehicles have been applied more extensively in the field of power electronics over recent years. The electric vehicle stores electric energy to implement endurance and driving, so that a user can implement operations such as charging at home. In comparison with a conventional vehicle, the electric vehicle is conducive to environmental protection, and does not require the user to refuel at a gas station. Therefore, convenience of the user's life is improved.

To improve safety, comfort, and related performance of the vehicle, a thermal management system needs to be used to control temperatures of a passenger cabin, a drive system (for example, a battery), and the like of the vehicle. When the thermal management system of the electric vehicle supplies heat to the passenger cabin, a heat exchanger needs to absorb heat from an environment. Consequently, there is a risk that the heat exchanger frosts. The heat exchanger may be defrosted by using a method of switching to a cooling mode or a method of switching to hot gas bypass, but both the methods have some shortcomings. When defrosting is performed by switching to the cooling mode, heat is absorbed from the passenger cabin, which severely affects user experience. When defrosting is performed by using hot gas bypass, heat cannot be supplied to the passenger cabin at the same time. Therefore, when defrosting is performed on the heat exchanger, how to supply heat to the passenger cabin to improve user experience is an urgent problem to be resolved.

US 2016/075212 A1 discloses a heat-pump-type vehicle air conditioning system that passes hot gas to both a vehicle-cabin-exterior condenser and a vehicle-cabin-exterior vaporizer during a defrosting operation, and that, even during times of low outside air temperature, can efficiently defrost in a short period of time and can use the cooling cycle of an existing system as-is. In the heat-pump-type vehicle air conditioning system: a vehicle-cabin-interior condenser disposed downstream of a vehicle-cabin-interior vaporizer within an HVAC unit is connected, with refrigerant switching means therebetween, to a cycle for cooling comprising an electric compressor, a vehicle-cabin-exterior condenser, a first decompression unit with on-off valve function, the vehicle-cabin-interior vaporizer, and an accumulator; a vehicle-cabin-exterior vaporizer disposed at the outside of the vehicle cabin is connected, with a second decompression unit with on-off valve function therebetween, to the exit-side liquid refrigerant pipe of the vehicle-cabin-exterior condenser; and furthermore a bypass circuit having a third decompression unit with on-off function is connected between the accumulator and the exit exit-side liquid refrigerant pipe of the vehicle-cabin-exterior condenser.

### SUMMARY

The object of the present invention is to provide a thermal management system, a method for controlling a thermal management system, a vehicle, and, and a computer-readable storage medium which can improve defrosting and heating performance. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides a thermal management system, including:
a compressor, including an input port and an output port, where the compressor is configured to: compress a refrigerant input from the input port, and output the compressed refrigerant through the output port;
a condenser, including a first interface (1) and a second interface (2), where the second interface (2) is connected to the output port;
a first heat exchanger, including a third interface (3) and a fourth interface (4), where the third interface (3) is connected to the output port, and the fourth interface (4) is connected to the input port;
a second heat exchanger, including a fifth interface (5) and a sixth interface (6), where the sixth interface (6) is connected to the input port; and
a first electronic expansion valve, including a seventh interface (7) and an eighth interface (8), where the seventh interface (7) is connected to the first interface (1), and the eighth interface (8) is connected to the fifth interface (5).

According to the solution of this application, two heat exchangers are disposed, so that a passenger cabin may be heated while defrosting is performed, thereby improving user experience.

According to the invention of the first aspect, the thermal management system further includes:
a first gas-liquid separator, including a ninth interface (9), a tenth interface (10), and an eleventh interface (11), where the ninth interface (9) is connected to the fourth interface (4), the tenth interface (10) is connected to the fifth interface (5), the eleventh interface (11) is connected to the input port, and the tenth interface (10) is a liquid output port of the first gas-liquid separator.

According to the solution of this application, the first gas-liquid separator is disposed, so that the refrigerant in the liquid state flowing out from the first heat exchanger in a first mode can flow back to a heating loop, which increases a flow volume of the refrigerant flowing into the second heat exchanger, and improves heating efficiency.

With reference to the first aspect, in some implementations of the first aspect, the thermal management system further includes:
a second electronic expansion valve, including a twelfth interface (12) and a thirteenth interface (13), where the twelfth interface (12) is connected to the fifth interface (5), and the thirteenth interface (13) is connected to the tenth interface (10).

According to the solution of this application, the second electronic expansion valve is disposed between the fifth interface and the tenth interface, to limit the flow volume and reduce pressure.

In a possible implementation, a flow volume of the refrigerant in the liquid state flowing into the second heat exchanger may be adjusted by using the second electronic expansion valve.

With reference to the first aspect, in some implementations of the first aspect, the thermal management system further includes:
a first solenoid valve, including a fourteenth interface (14) and a fifteenth interface (15), where the fourteenth interface (14) is connected to the thirteenth interface (13), and the fifteenth interface (15) is connected to the tenth interface (10).

According to the solution of this application, when the second electronic expansion valve does not have a cut-off function, the cut-off function may be implemented by disposing the first solenoid valve.

With reference to the first aspect, in some implementations of the first aspect, the thermal management system further includes:
a third electronic expansion valve, including a sixteenth interface (16) and a seventeenth interface (17), where the sixteenth interface (16) is connected to the third interface (3), and the seventeenth interface (17) is connected to the output port.

According to the solution provided in this application, the third electronic expansion valve may be disposed to limit the flow volume and reduce pressure, to avoid an excessively large pressure of refrigerant flowing into the compressor in the first mode.

With reference to the first aspect, in some implementations of the first aspect, in a first direction, the first heat exchanger is in an upstream location of the second heat exchanger, and the first direction is an air flowing direction.

According to the solution of this application, in the first direction, the first heat exchanger is in an upstream location of the second heat exchanger. In the first mode, when air flows, the air first flows through the first heat exchanger, and then flows through the second heat exchanger. After the air flows from the first heat exchanger, the air is heated. Therefore, an air temperature around the second heat exchanger increases, and a probability of frosting/icing of the second heat exchanger in a second mode can be reduced to some extent.

With reference to the first aspect, in some implementations of the first aspect, the thermal management system further includes:
a fan, where the fan is located in a downstream of the second heat exchanger in the first direction, and the fan is configured to enable air to flow in the first direction.

According to the solution of this application, the fan is disposed to accelerate air flowing in the first direction.

With reference to the first aspect, in some implementations of the first aspect, the thermal management system further includes: a fourth electronic expansion valve, including an eighteenth interface (18) and a nineteenth interface (19), where the eighteenth interface (18) is connected to the first interface (1), and the nineteenth interface (19) is connected to the third interface (3).

With reference to the first aspect, in some implementations of the first aspect, the thermal management system further includes a first controller.

In the first mode, the first controller is configured to control the first electronic expansion valve, the second electronic expansion valve, the third electronic expansion valve, and the first solenoid valve to be enabled, and control the fourth electronic expansion valve to be disabled, where the first mode is a mode in which defrosting is performed and a passenger cabin is heated.

With reference to the first aspect, in some implementations of the first aspect, in the second mode, the first controller is configured to control the first electronic expansion valve, the second electronic expansion valve, the third electronic expansion valve, and the first solenoid valve to be disabled, and control the fourth electronic expansion valve to be enabled, where the second mode is a mode in which the passenger cabin is heated.

According to a second aspect according to the invention, the invention also provides a method for controlling a thermal management system is provided. The thermal management system includes:
a compressor, including an input port and an output port, where the compressor is configured to: compress a refrigerant input from the input port, and output the compressed refrigerant through the output port;
a condenser, including a first interface (1) and a second interface (2), where the second interface (2) is connected to the output port;
a first heat exchanger, including a third interface (3) and a fourth interface (4), where the third interface (3) is connected to the output port, and the fourth interface (4) is connected to the input port;
a second heat exchanger, including a fifth interface (5) and a sixth interface (6), where the sixth interface (6) is connected to the input port; and
a first electronic expansion valve, including a seventh interface (7) and an eighth interface (8), where the seventh interface (7) is connected to the first interface (1), and the eighth interface (8) is connected to the fifth interface (5).

The method includes:
receiving a first instruction; and controlling, based on the first instruction, the first electronic expansion valve to be enabled.

It should be understood that the first instruction instructs the thermal management system to work in the first mode, and the first mode is a mode in which defrosting is performed and the passenger cabin is heated.

With reference to the second aspect, in some implementations of the second aspect, the thermal management system further includes:
a first gas-liquid separator, including a ninth interface (9), a tenth interface (10), and an eleventh interface (11), where the ninth interface (9) is connected to the fourth interface (4), the tenth interface (10) is connected to the fifth interface (5), and the eleventh interface (11) is connected to the input port. The tenth interface (10) is a liquid output port of the first gas-liquid separator, and the eleventh interface (11) is a gas output port of the first gas-liquid separator.

The thermal management system further includes a second electronic expansion valve, including a twelfth interface (12) and a thirteenth interface (13), where the twelfth interface (12) is connected to the fifth interface (5), and the thirteenth interface (13) is connected to the tenth interface (10).

The method includes:
controlling, based on the first instruction, the second electronic expansion valve to be enabled.

With reference to the second aspect, in some implementations of the second aspect, the thermal management system further includes:
a first solenoid valve, including a fourteenth interface (14) and a fifteenth interface (15), where the fourteenth interface (14) is connected to the thirteenth interface (13), and the fifteenth interface (15) is connected to the tenth interface (10).

The method includes:
controlling, based on the first instruction, the first solenoid valve to be enabled.

With reference to the second aspect, in some not claimed implementations of the second aspect, the thermal management system further includes:
a third electronic expansion valve, including a sixteenth interface (16) and a seventeenth interface (17), where the sixteenth interface (16) is connected to the third interface (3), and the seventeenth interface (17) is connected to the output port.

The method includes:
controlling, based on the first instruction, the third electronic expansion valve to be enabled.

With reference to the second aspect, in some not claimed implementations of the second aspect, in a first direction, the first heat exchanger is in an upstream location of the second heat exchanger, and the first direction is an air flowing direction.

With reference to the second aspect, in some not claimed implementations of the second aspect, the thermal management system further includes a fan. The method further includes: controlling, based on the first instruction, the fan to be turned on, to enable air flows in the first direction.

With reference to the second aspect, in some not claimed implementations of the second aspect, the thermal management system further includes:
a fourth electronic expansion valve, including an eighteenth interface (18) and a nineteenth interface (19), where the eighteenth interface (18) is connected to the first interface (1), and the nineteenth interface (19) is connected to the third interface (3).

The method includes:
controlling, based on the first instruction, the fourth electronic expansion valve to be disabled.

With reference to the second aspect, in some not claimed implementations of the second aspect, the method further includes:
obtaining a second instruction; and controlling, based on the second instruction, the first electronic expansion valve, the second electronic expansion valve, the third electronic expansion valve, and the first solenoid valve to be disabled, and controlling the fourth electronic expansion valve to be enabled.

It should be understood that the second instruction instructs the thermal management system to work in the second mode, and the second mode is a mode in which the passenger cabin is heated.

With reference to the second aspect, in some not claimed implementations of the second aspect, the method further includes:
obtaining a first signal from a first sensor; and adjusting, based on the first signal, a flow volume of a refrigerant entering the second heat exchanger.

With reference to the second aspect, in some not claimed implementations of the second aspect, the adjusting, based on the first signal, a flow volume of a refrigerant entering the second heat exchanger includes:
controlling, based on the first signal, at least one of the first electronic expansion valve, the second electronic expansion valve, or the third electronic expansion valve, to adjust the flow volume of the refrigerant entering the second heat exchanger.

It should be understood that the not claimed first sensor may be a pressure sensor and/or a temperature sensor, and the first sensor may be installed at the fifth interface and/or the sixth interface of the second heat exchanger, to monitor the flow volume of the refrigerant flowing through the second heat exchanger. When the flow volume of the refrigerant flowing through the second heat exchanger is excessively large or excessively small, at least one of the first electronic expansion valve to the third electronic expansion valve may be controlled, to adjust the flow volume of the refrigerant flowing through the second heat exchanger.

It should be understood that, in a possible not claimed implementation, the first electronic expansion valve and/or the second electronic expansion valve may be adjusted, but the third electronic expansion valve is not adjusted, so that the refrigerant in the liquid state in the first gas-liquid separator can return to the heating loop, which improves utilization efficiency of the refrigerant.

According to a third aspect according to the invention, the invention also provides a vehicle. The vehicle includes the thermal management system according to any one of the first aspect or the implementations of the first aspect.

According to a fourth aspect, although not claimed, a controller is provided, including a processor and a memory. The processor is configured to execute a computer program or instructions stored in the memory, so that a communication device performs the method in any one of the possible implementations of the second aspect.

According to a fifth aspect according to the invention, the invention also provides a computer-readable storage medium, including a computer program or instructions. When the computer program or the instructions are run on a computer, the computer is enabled to perform the method according to any possible implementation of the second aspect.

According to a sixth aspect, although not claimed, a chip system is provided, including at least one processor, configured to execute a computer program or instructions in a memory, so that the method according to any possible implementation of the second aspect is implemented.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of a structure of a thermal management system according to this application;
FIG. 2 is a diagram of a circulation process of a refrigerant in a thermal management system in a first mode;
FIG. 3 is a diagram of a circulation process of a refrigerant in a thermal management system in a second mode;
FIG. 4 is a diagram of a circulation process of a refrigerant in a thermal management system in a third mode;
FIG. 5 is a diagram of a circulation process of a refrigerant in a thermal management system in a fourth mode;
FIG. 6 is a diagram of a circulation process of a refrigerant in a thermal management system in a fifth mode;
FIG. 7 is a diagram of a circulation process of a refrigerant in a thermal management system in a sixth mode; and
FIG. 8 is a diagram of a circulation process of a refrigerant in a thermal management system in a seventh mode.

### DESCRIPTION OF EMBODIMENTS

The following describes technical solutions of this application in detail with reference to accompanying drawings.

A thermal management system provided in this application is applicable to an electric vehicle. The electric vehicle is a vehicle to which an electric drive is applicable for driving. The electric vehicle may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid vehicle (plug-in hybrid electric vehicle, PHEV), a new energy vehicle (new energy vehicle, NEV), or the like.

The thermal management system in this application may use a refrigerant (Refrigerant) to heat or cool a managed object. For example, the managed object may be a passenger cabin or a battery. In this application, the refrigerant is used to transfer heat energy, in other words, the refrigerant may transfer heat through evaporation and condensation.

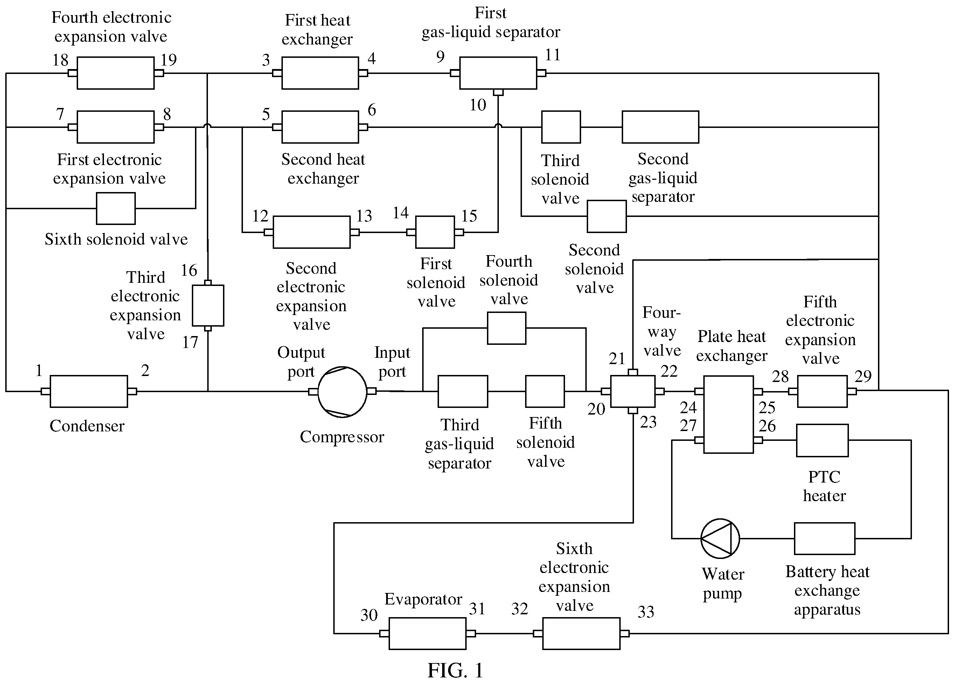

FIG. 1 shows a schematic structure of a thermal management system according to this application. The thermal management system may include a refrigerant circulation system.

The following describes, with reference to FIG. 1, components included in the thermal management system provided in this application and connection relationships between the components. Numbers 1 to 33 in FIG. 1 respectively correspond to a first interface to a thirty-third interface in the following. The thermal management system includes but is not limited to the following components.

### A. Compressor

A compressor (Compressor) is a type of machinery that compresses gas and increases pressure of the gas. As shown in FIG. 1, the compressor includes an input port and an output port.

A refrigerant in a low-temperature gas state may enter the compressor through the input port. The compressor may compress the refrigerant in the gas state, so that the refrigerant changes from the low-temperature gas state to a high-temperature high-pressure gas state. The compressed refrigerant is output through the output port.

### B. Condenser and evaporator

As shown in FIG. 1, a condenser includes a first interface and a second interface, where the first interface is connected to an eighteenth interface of a first electronic expansion valve below and a seventh interface of a second electronic expansion valve below, and the second interface is connected to the foregoing output port.

When a flap (not shown in the figure) at the condenser is enabled, the condenser is configured to cool a refrigerant, so that the refrigerant changes from a gas state to a liquid state. It should be understood that in a process in which the refrigerant changes from the gas state to the liquid state, heat may be released to an environment.

As shown in FIG. 1, an evaporator includes a thirtieth interface and a thirty-first interface, where the thirtieth interface is connected to a twenty-third interface of a four-way valve below, and the thirty-first interface is connected to a thirty-second interface of a sixth electronic expansion valve below.

The evaporator is configured to evaporate a refrigerant in a liquid state, so that the refrigerant changes from the liquid state to a gas state. It should be understood that in a process in which the refrigerant changes from the liquid state to the gas state, heat in the environment needs to be absorbed.

In a possible implementation, the condenser and the evaporator are different apparatuses.

In another possible implementation, the condenser and the evaporator may be a same apparatus. The apparatus is equivalent to the condenser in a heating process, and the apparatus is equivalent to the evaporator in a cooling process.

In the thermal management system of this application, the condenser and the evaporator are different apparatuses. However, a person skilled in the art may use one apparatus to implement functions of the condenser and the evaporator according to a concept of this application. This solution should also fall within the protection scope of this application.

### C. Electronic expansion valve

An electronic expansion valve is an apparatus that controls, by using an electrical signal generated based on an adjusted parameter, a voltage or current applied to the electronic expansion valve, to control a flow volume of a refrigerant. When the electronic expansion valve is enabled, the electronic expansion valve may limit the flow volume and reduce pressure.

As shown in FIG. 1, the thermal management system in this application includes a first electronic expansion valve, a second electronic expansion valve, a third electronic expansion valve, a fourth electronic expansion valve, a fifth electronic expansion valve, and a sixth electronic expansion valve.

The first electronic expansion valve includes a seventh interface and an eighth interface, where the seventh interface is connected to the foregoing first interface, and the eighth interface is connected to a fifth interface of a second heat exchanger below. It should be understood that the first electronic expansion valve may be integrated with the following second heat exchanger, or may be separated from the second heat exchanger. This is not limited in this application.

The second electronic expansion valve includes a twelfth interface and a thirteenth interface, where the twelfth interface is connected to the fifth interface of the second heat exchanger, and the thirteenth interface may be connected to a tenth interface of a first gas-liquid separator below through a third solenoid valve below.

In a possible implementation, the second electronic expansion valve may also be integrated with the second heat exchanger.

In another possible implementation, when both the first electronic expansion valve and the second electronic expansion valve are integrated with the second heat exchanger, one electronic expansion valve may be saved, and costs are reduced. When the electronic expansion valve is integrated at the fifth interface of the second heat exchanger, as shown in FIG. 1, the first interface of the condenser is connected to the fifth interface of the second heat exchanger, and the tenth interface of the first gas-liquid separator is connected to the fifth interface of the second heat exchanger through a first solenoid valve. This is not limited in this application.

The third electronic expansion valve includes a sixteenth interface and a seventeenth interface, where the sixteenth interface is connected to a third interface of a first heat exchanger below, and the seventeenth interface is connected to the foregoing output port.

The fourth electronic expansion valve includes an eighteenth interface and a nineteenth interface, where the eighteenth interface is connected to the foregoing first interface, and the nineteenth interface is connected to the third interface of the following first heat exchanger. It should be understood that the fourth electronic expansion valve may be integrated with the following first heat exchanger, or may be separated from the first heat exchanger. This is not limited in this application.

The fifth electronic expansion valve includes a twenty-eighth interface and a twenty-ninth interface, where the twenty-eighth interface is connected to a twenty-fifth interface of a plate heat exchanger below, and the twenty-ninth interface is connected to a second solenoid valve below and a second gas-liquid separator below.

The sixth electronic expansion valve includes a thirty-second interface and a thirty-third interface, where the thirty-second interface is connected to the foregoing thirty-first interface, and the thirty-third interface is connected to the second solenoid valve below and the second gas-liquid separator.

### D. Heat exchanger

A heat exchanger (also known as a heat exchange device) is an apparatus used to transfer heat from hot fluid to cool fluid to meet specified process requirements, and is an industrial application of convective heat transfer and heat conduction.

As shown in FIG. 1, the refrigerant may absorb heat from the first heat exchanger, and change from a liquid state to a gas state.

The first heat exchanger includes the third interface and a fourth interface. The refrigerant may enter the first heat exchanger through the third interface, and is discharged from the first heat exchanger through the fourth interface.

The third interface is connected to the nineteenth interface of the fourth electronic expansion valve, and is further connected to the sixteenth interface of the third electronic expansion valve.

The fourth interface is indirectly connected to the input port of the compressor through the following first gas-liquid separator. Specifically, the fourth interface is connected to a ninth interface of the following first gas-liquid separator, and the input port of the compressor is connected to an eleventh interface of the following first gas-liquid separator.

As shown in FIG. 1, in a case, the second heat exchanger is configured to cool the refrigerant in the gas state, so that the refrigerant changes from the gas state to the liquid state. In this case, the second heat exchanger may be considered as the condenser.

In another case, the second heat exchanger is configured to evaporate the refrigerant in the liquid state, so that the refrigerant changes from the liquid state to the gas state. In this case, the second heat exchanger may be considered as the evaporator.

The second heat exchanger includes the fifth interface and a sixth interface, where the fifth interface is connected to the eighth interface of the first electronic expansion valve, the fifth interface is further connected to the twelfth interface of the second electronic expansion valve, and the sixth interface may be indirectly connected to the input port of the compressor through another apparatus.

### E. Gas-liquid separator

A gas-liquid separator is an apparatus used to separate gas and liquid in gas-liquid mixture. Common separation methods include: gravity settlement, baffle separation, centrifugal force separation, wire mesh separation, ultrafiltration separation, filler separation, and the like.

As shown in FIG. 1, the thermal management system may include the first gas-liquid separator, where the first gas-liquid separator includes the ninth interface, the tenth interface, and the eleventh interface. The ninth interface is connected to the fourth interface of the first heat exchanger, the tenth interface is indirectly connected to the thirteenth interface of the second electronic expansion valve, and the eleventh interface is indirectly connected to the input port of the compressor. The tenth interface is a liquid output port of the first gas-liquid separator, and the eleventh interface is a gas output port of the first gas-liquid separator.

As shown in FIG. 1, the thermal management system may further include the second gas-liquid separator and a third gas-liquid separator. An input port of the second gas-liquid separator is connected to the sixth interface of the second heat exchanger through the following third solenoid valve, and a gas output port of the second gas-liquid separator is connected to a twenty-first interface of a four-way valve below, the twenty-ninth interface of the fifth electronic expansion valve, and the thirty-third interface of the sixth electronic expansion valve. An input port of the third gas-liquid separator is connected to a twentieth interface of the following four-way valve through a fifth solenoid valve below, and a gas output port of the third gas-liquid separator is connected to the input port of the foregoing compressor.

The gas-liquid separator is set in the thermal management system to protect the compressor and prevent liquid strike in the compressor.

### F. Solenoid valve

A solenoid valve in the thermal management system in this application performs a flowing function. That is, when the solenoid valve is enabled, the refrigerant may flow through the solenoid valve; or when the solenoid valve is disabled, the refrigerant may not flow through the solenoid valve.

As shown in FIG. 1, the thermal management system in this application includes the second solenoid valve, the third solenoid valve, a fourth solenoid valve, the fifth solenoid valve, and a sixth solenoid valve. In a possible implementation, the thermal management system may further include the first solenoid valve.

The first solenoid valve includes a fourteenth interface and a fifteenth interface, where the fourteenth interface is connected to the thirteenth interface of the second electronic expansion valve, and the fifteenth interface is connected to the tenth interface of the first gas-liquid separator.

An input port of the second solenoid valve is connected to the sixth interface of the second heat exchanger, and an output port of the second solenoid valve is connected to the twenty-first interface of the four-way valve below, the twenty-ninth interface of the fifth electronic expansion valve, and the thirty-third interface of the sixth electronic expansion valve. The second solenoid valve is connected in parallel to the third solenoid valve and the second gas-liquid separator.

An input port of the third solenoid valve is connected to the sixth interface of the second heat exchanger, and an output port of the third solenoid valve is connected to an input port of the second gas-liquid separator.

An input port of the fourth solenoid valve is connected to the twentieth interface of the following four-way valve, and an output port of the fourth solenoid valve is connected to the input port of the compressor.

An input port of the fifth solenoid valve is connected to a twentieth interface of the following four-way valve, and an output port of the fifth solenoid valve is connected to the input port of the foregoing third gas-liquid separator.

An input port of the sixth solenoid valve is connected to the first interface of the condenser, and an output port of the sixth solenoid valve is connected to the fifth interface of the second heat exchanger. The sixth solenoid valve is connected in parallel to the first electronic expansion valve.

### G. Four-way valve

As shown in FIG. 1, a four-way valve includes a twentieth interface to a twenty-third interface, where the twenty-second interface is connected to a twenty-fourth interface of the following plate heat exchanger, and connection relationships of other interfaces are described above.

In addition to the foregoing apparatus, the thermal management system provided in this application further includes the plate heat exchanger, a positive temperature coefficient (positive temperature coefficient, PTC) heater, a water pump, and a battery heat exchange apparatus. An output port of the water pump is connected to a twenty-seventh interface of the plate heat exchanger, and the PTC heater is connected to a twenty-sixth interface of the plate heat exchanger. The PTC heater, battery heat exchange apparatus, and water pump are connected in series.

In addition, the thermal management system provided in this application further includes a first controller (not shown in the figure). The first controller is configured to receive instructions, and the instructions instruct a working mode of the thermal management system. The first controller controls the apparatus based on the received instructions, so that the thermal management system provided in this application may support at least seven modes. For example, the first controller may obtain a first instruction, where the first instruction instructs the thermal management system to work in a first mode. For another example, the first controller may obtain a second instruction, where the second instruction instructs the thermal management system to work in a second mode.

In the seven modes, the first mode is a mode in which defrosting is performed and a passenger cabin is heated, a second mode is a mode in which the passenger cabin is heated, a third mode is a mode in which defrosting is performed, a fourth mode is a mode in which a battery is heated, a fifth mode is a mode in which the battery is cooled, a sixth mode is a mode in which the passenger cabin is cooled, and a seventh mode is a mode in which the passenger cabin and the battery are simultaneously cooled.

The following describes the seven modes in detail.

First mode: (where defrosting is performed and the passenger cabin is heated)

To perform heating on the passenger cabin in a process of defrosting the first heat exchanger, the thermal management system is designed with the first mode.

In the first mode, the first controller controls the following apparatuses to be in an enabled state:
the first electronic expansion valve, the second electronic expansion valve, the third electronic expansion valve, the first solenoid valve, the third solenoid valve, the fourth solenoid valve, and the twentieth interface and the twenty-first interface of the four-way valve.

In addition, the first controller controls the flap at the condenser to be enabled, so that the condenser performs heat exchange, that is, the condenser performs a condensation function in the first mode.

In the first mode, the first controller controls the following apparatuses to be in a disabled state:
the fourth electronic expansion valve, the fifth electronic expansion valve, the sixth electronic expansion valve, the second solenoid valve, the fifth solenoid valve, the sixth solenoid valve, the water pump, and the PTC heater.

The following describes a circulation process of the refrigerant in the first mode.

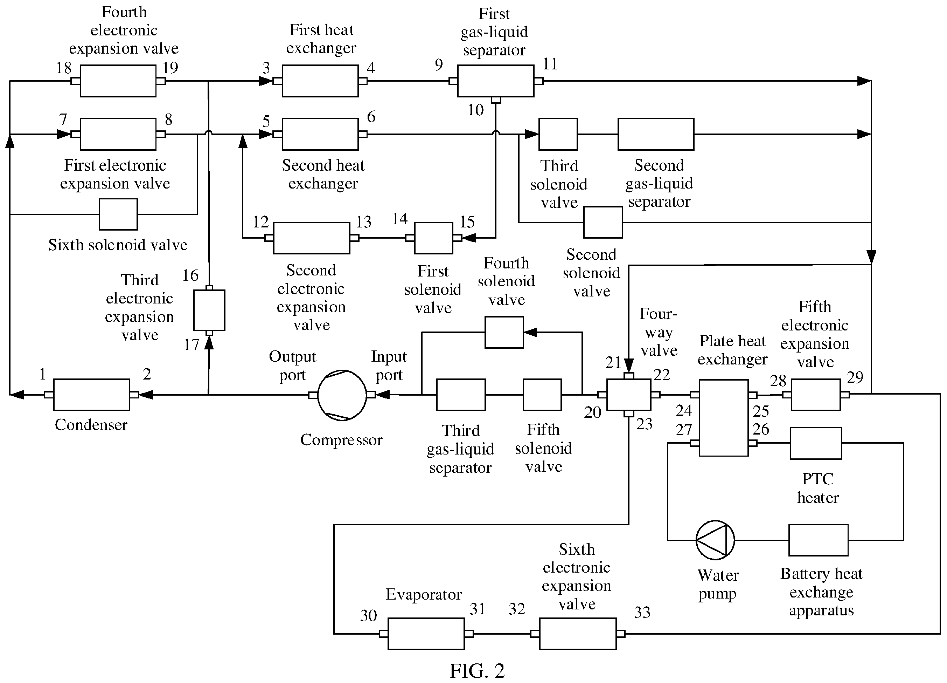

As shown in FIG. 2, a refrigerant in a high-temperature high-pressure gas state output from the output port of the compressor is divided into two channels, which are denoted as a first channel of refrigerant and a second channel of refrigerant.

The first channel of refrigerant flows into the condenser from the second interface of the condenser, and heat carried by the first channel of refrigerant is released to the passenger cabin, to heat air in the passenger cabin. After passing through the condenser, the first channel of refrigerant becomes the refrigerant in a high-temperature high-pressure liquid state, and then flows out from the first interface of the condenser. The refrigerant in the high-temperature high-pressure liquid state flows through the first electronic expansion valve, and becomes the refrigerant in a low-temperature low-pressure two-phase state. The refrigerant in the low-temperature low-pressure two-phase state flows into the second heat exchanger through the fifth interface of the second heat exchanger, absorbs heat in an environment, and becomes the refrigerant in a low-temperature low-pressure gas state. That is, in this case, the second heat exchanger is configured as an evaporator. Then, the refrigerant in the low-temperature low-pressure gas state flows, through the third solenoid valve, the second gas-liquid separator, the twenty-first interface and the twentieth interface of the four-way valve, and the fourth solenoid valve in sequence, into the compressor from the input port of the compressor, to complete a circulation process of the first channel of refrigerant in the first mode.

The second channel of refrigerant flows, through the third electronic expansion valve, into the first heat exchanger from the third interface of the first heat exchanger, flows out from the fourth interface of the first heat exchanger, and melts frost/ice on a surface of the first heat exchanger by using a high temperature of the refrigerant. That is, in this case, the first heat exchanger only performs a conduction function. Then, the second channel of refrigerant flows through the first gas-liquid separator, and the first gas-liquid separator separates the refrigerant in a gas state from the refrigerant in a liquid state in the second channel of refrigerant. The refrigerant in the gas state in the second channel of refrigerant flows, through the eleventh interface of the first gas-liquid separator, the twenty-first interface and the twentieth interface of the four-way valve, and the fourth solenoid valve in sequence, into the compressor from the input port of the compressor. The refrigerant in the liquid state in the second channel of refrigerant flows, through the tenth interface of the first gas-liquid separator, the first solenoid valve, and the second electronic expansion valve in sequence, into the second heat exchanger from the fifth interface of the second heat exchanger, and completes heating in the passenger cabin together with the first channel of refrigerant.

In a possible implementation, a flow volume of the refrigerant in the liquid state flowing into the second heat exchanger may be adjusted by using the second electronic expansion valve.

According to the solution of this application, the first gas-liquid separator is disposed, so that the refrigerant in the liquid state in a defrosting loop can flow back to a heating loop, which increases a flow volume of the refrigerant flowing into the second heat exchanger, and improves heating efficiency.

In another possible implementation, the thermal management system does not include a branch including the tenth interface of the first gas-liquid separator, the first solenoid valve, and the second electronic expansion valve. In this case, in the first mode, the second channel of refrigerant flows, through the third electronic expansion valve, into the first heat exchanger from the third interface of the first heat exchanger, and frost/ice on the surface of the first heat exchanger is melted by using the high temperature of the refrigerant. Then, the second channel of refrigerant flows, through the first gas-liquid separator, the twenty-first interface and the twentieth interface of the four-way valve, and the fourth solenoid valve in sequence, into the compressor from the input port of the compressor, to complete a circulation process of the second channel of refrigerant in the thermal management system.

According to the foregoing description, in the first mode, the second heat exchanger implements heating in the passenger cabin, and defrost is performed on the first heat exchanger, so that defrosting and heating in the passenger cabin are simultaneously performed.

In a possible implementation, in a first direction, the first heat exchanger is in an upstream location of the second heat exchanger, and the first direction is an air flowing direction. Preferably, the first heat exchanger and the second heat exchanger may be placed side by side. Preferably, a fan (not shown in the figure) is disposed in the first direction, and the fan is located downstream of the second heat exchanger. When the fan is turned on, air flows in the first direction. According to the foregoing arrangement manner, during flowing, air first passes through the first heat exchanger, and then passes through the second heat exchanger. After the air flows from the first heat exchanger, the air is heated. Therefore, an air temperature around the second heat exchanger increases, and a probability of frosting/icing of the second heat exchanger in the first mode can be reduced to some extent. In addition, after the air is heated by the first heat exchanger, heat stored in the air is transferred to the second heat exchanger, to recycle residual heat, which improves heating efficiency of the passenger cabin.

In another possible implementation, in addition to the foregoing manner, a fin may be further installed between the first heat exchanger and the second heat exchanger, and heat of the first heat exchanger is transferred to the second heat exchanger in a heat conduction manner, which further reduces the probability of frosting/icing of the second heat exchanger.

In another possible implementation, a first heat source (not shown in the figure) may be further installed at the second heat exchanger. In the first mode, the first controller controls the first heat source to work to generate heat, to reduce the probability of frosting/icing of the second heat exchanger.

In a possible implementation, a first sensor may be installed at the fifth interface and/or the sixth interface of the second heat exchanger, and the first sensor may be a pressure sensor and/or a temperature sensor.

The first controller may adjust, based on a first signal obtained from the first sensor, the flow volume of the refrigerant entering the second heat exchanger. For example, the first controller may control, based on the first signal, at least one of the first electronic expansion valve to the third electronic expansion valve, to adjust a flow volume of the refrigerant passing through the second heat exchanger.

It should be understood that, in a possible implementation, the first controller may adjust the first electronic expansion valve and/or the second electronic expansion valve, but does not adjust the third electronic expansion valve, so that the refrigerant in the liquid state in the first gas-liquid separator can return to the heating loop, which improves utilization efficiency of the refrigerant.

Second mode (where the passenger cabin is heated):
In the second mode, the first controller controls the following apparatuses to be in an enabled state:
the fourth electronic expansion valve, the twentieth interface and the twenty-first interface of the four-way valve, and the fourth solenoid valve.

In addition, the first controller controls the flap at the condenser to be enabled, so that the condenser performs heat exchange, that is, the condenser performs a condensation function in the second mode.

The first controller controls the following apparatuses to be in a disabled state:
the first electronic expansion valve, the second electronic expansion valve, the third electronic expansion valve, the fifth electronic expansion valve, the sixth electronic expansion valve, the first solenoid valve, the second solenoid valve, the third solenoid valve, the fifth solenoid valve, the sixth solenoid valve, the water pump, and the PTC heater.

The following describes a circulation process of the refrigerant in the second mode.

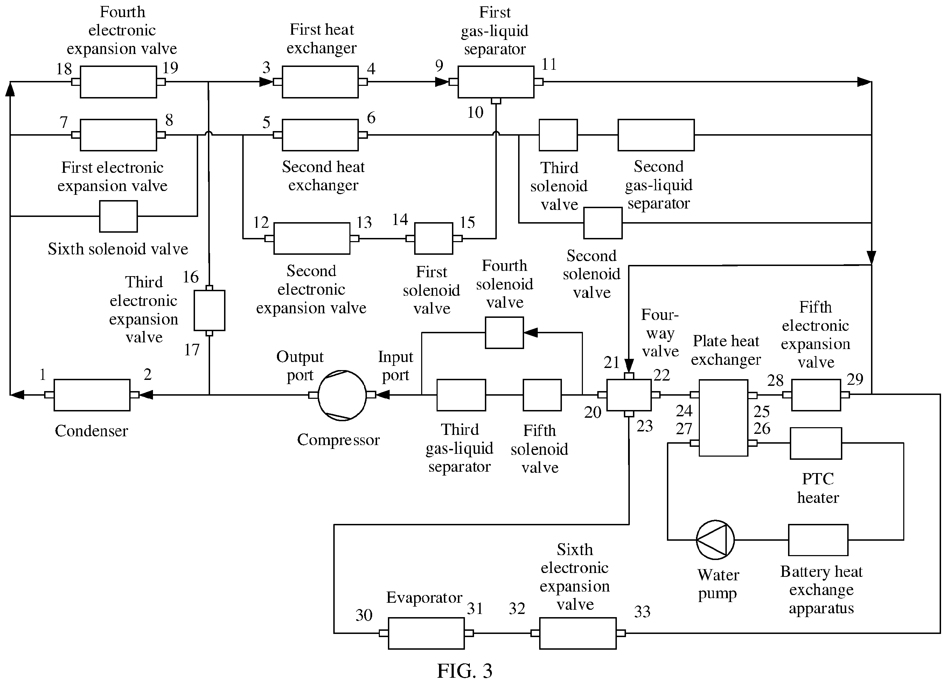

As shown in FIG. 3, a refrigerant in a high-temperature high-pressure gas state output from the output port of the compressor flows into the condenser from the second interface of the condenser, and heat carried by the refrigerant in the high-temperature high-pressure gas state is released to the passenger cabin, to heat air in the passenger cabin. After passing through the condenser, the refrigerant in the high-temperature high-pressure gas state becomes the refrigerant in a high-temperature high-pressure liquid state, and then flows out from the first interface of the condenser. The refrigerant in the high-temperature high-pressure liquid state flows through the fourth electronic expansion valve, and becomes the refrigerant in a low-temperature low-pressure two-phase state. It should be understood that the refrigerant in a two-phase state in this specification is a refrigerant mixed by a liquid state and a gas state. The refrigerant in the low-temperature low-pressure two-phase state flows into the first heat exchanger through the third interface of the first heat exchanger, absorbs heat in an environment, and becomes the refrigerant in a low-temperature low-pressure gas state. That is, in this case, the first heat exchanger is configured as an evaporator. Then, the refrigerant in the low-temperature low-pressure gas state flows, through the ninth interface and the eleventh interface of the first gas-liquid separator, the twenty-first interface and the twentieth interface of the four-way valve, and the fourth solenoid valve in sequence, into the compressor from the input port of the compressor, to complete the circulation process of the refrigerant in the second mode.

Third mode: (where defrosting is performed):
In the second mode, a surface temperature of the first heat exchanger is lower than an environment temperature. Consequently, water vapor in the air condenses when the water vapor encounters a cold temperature. When the ambient temperature is lower than 0°C, condensate water on the surface of the first heat exchanger freezes. When the condensate water freezes much, an effective heat exchange area of the first heat exchanger is greatly reduced, which reduces a heat exchange effect of the first heat exchanger and affects a heating effect in the passenger cabin. To remove frost/ice from the surface of the first heat exchanger, the thermal management system is also designed with a third mode. When the surface of the first heat exchanger has much frost/ice, the third mode is enabled to remove a frost layer, so that the thermal management system can run efficiently.

In the third mode, the first controller controls the following apparatuses to be in an enabled state:
the third electronic expansion valve, the twentieth interface and the twenty-first interface of the four-way valve, and the fourth solenoid valve.

In the third mode, the first controller controls the following apparatuses to be in a disabled state:
the first electronic expansion valve, the second electronic expansion valve, the fourth electronic expansion valve, the fifth electronic expansion valve, the sixth electronic expansion valve, the first solenoid valve, the second solenoid valve, the third solenoid valve, the fifth solenoid valve, the sixth solenoid valve, the water pump, and the PTC heater.

The following describes a circulation process of the refrigerant in the third mode.

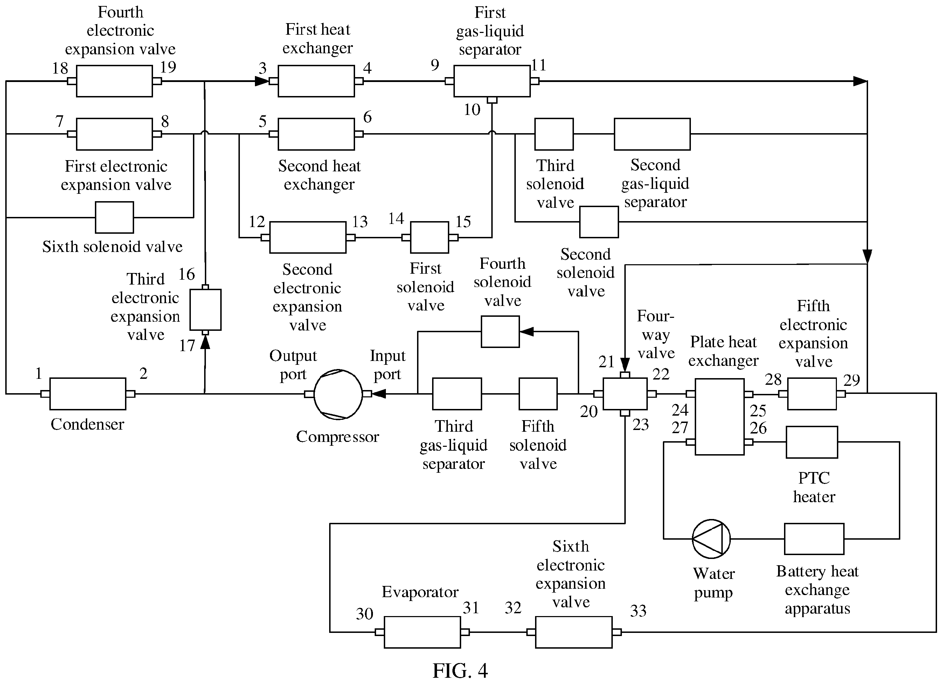

As shown in FIG. 4, the refrigerant in a high-temperature high-pressure gas state output from the output port of the compressor flows, through the third electronic expansion valve, into the first heat exchanger from the third interface of the first heat exchanger, and melts the frost/ice on the surface of the first heat exchanger by using a high temperature of the refrigerant. That is, in this case, the first heat exchanger only performs a conduction function. Then, the refrigerant flowing out from the fourth interface of the first heat exchanger flows, through the first gas-liquid separator, the twenty-first interface and the twentieth interface of the four-way valve, and the fourth solenoid valve in sequence, into the compressor from the input port of the compressor, to complete the circulation process of the refrigerant in the third mode.

In the third mode, only defrosting may be performed on the first heat exchanger, and heating may not be performed on the passenger cabin. Consequently, thermal comfort experience of a user is poor.

Generally, a battery (for example, a power battery) of an electric vehicle needs to work in a proper temperature range. If a battery temperature is too high, the battery lifespan is shortened and safety risks may occur. If the battery temperature is too low, available capacity of the battery may be greatly attenuated, which limits battery performance. Consequently, when the battery works, the temperature of the battery needs to be maintained within a specific range. On this basis, the thermal management system provided in this application further supports a fourth mode and a fifth mode. The fourth mode and the fifth mode are separately described below.

Fourth mode: (where the battery is heated)
In the fourth mode, the first controller controls the water pump to be in an enabled state. The first controller controls the PTC heater to work, which is configured to heat coolant.

The first controller controls the following apparatuses to be in a disabled state:
the compressor, the first electronic expansion valve, the second electronic expansion valve, the third electronic expansion valve, the fourth electronic expansion valve, the fifth electronic expansion valve, the sixth electronic expansion valve, the first solenoid valve, the second solenoid valve, the third solenoid valve, the fourth solenoid valve, the fifth solenoid valve, the sixth solenoid valve, and the four-way valve.

The following describes a circulation process of the coolant in the fourth mode.

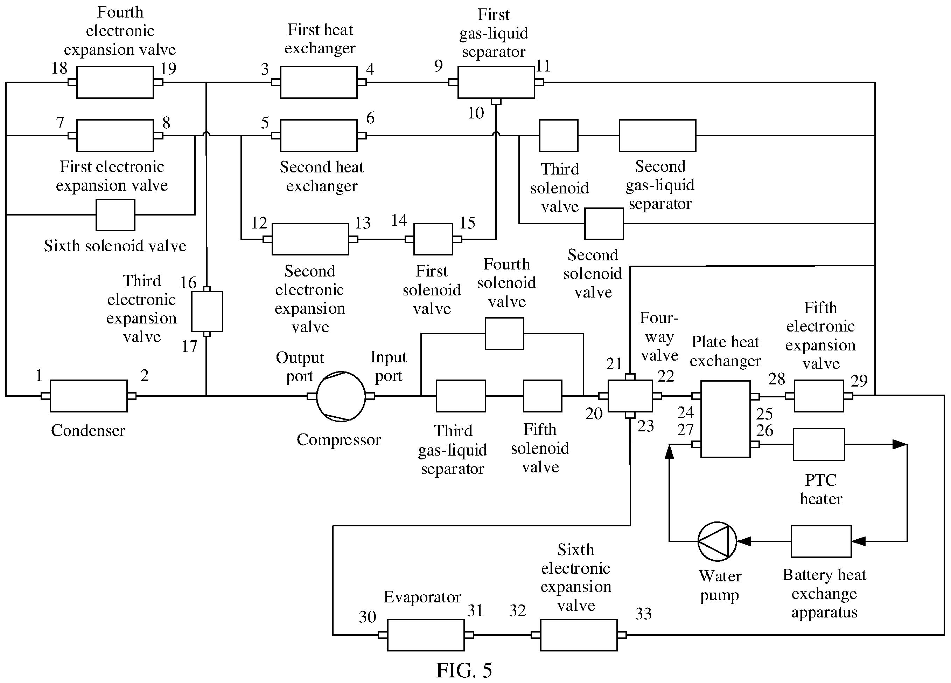

As shown in FIG. 5, the coolant flowing out from the water pump flows, through the twenty-seventh interface and the twenty-sixth interface of the plate heat exchanger in sequence, into the PTC heater, and is heated at the PTC heater. The heated coolant flows through the battery heat exchange apparatus, and transfers heat to the battery heat exchange apparatus, to heat the battery. After the coolant flows out from the battery heat exchange apparatus, the coolant flows into the water pump, to complete the circulation process of the coolant in the fourth mode.

Fifth mode: (where the battery is cooled)
In the fifth mode, the first controller controls the following apparatuses to be in an enabled state:
the second solenoid valve, the fifth solenoid valve, the sixth solenoid valve, the fifth electronic expansion valve, and the twentieth interface and the twenty-second interface of the four-way valve.

In addition, the first controller controls the flap at the condenser to be disabled, so that the condenser does not perform heat exchange, that is, the condenser only performs a conduction function in this case. The first controller controls the PTC heater, so that the PTC heater performs only a conduction function.

The first controller controls the following apparatuses to be in a disabled state:
the first electronic expansion valve, the second electronic expansion valve, the third electronic expansion valve, the fourth electronic expansion valve, the sixth electronic expansion valve, the first solenoid valve, the third solenoid valve, and the fourth solenoid valve.

The following describes a circulation process of the refrigerant in the fifth mode.

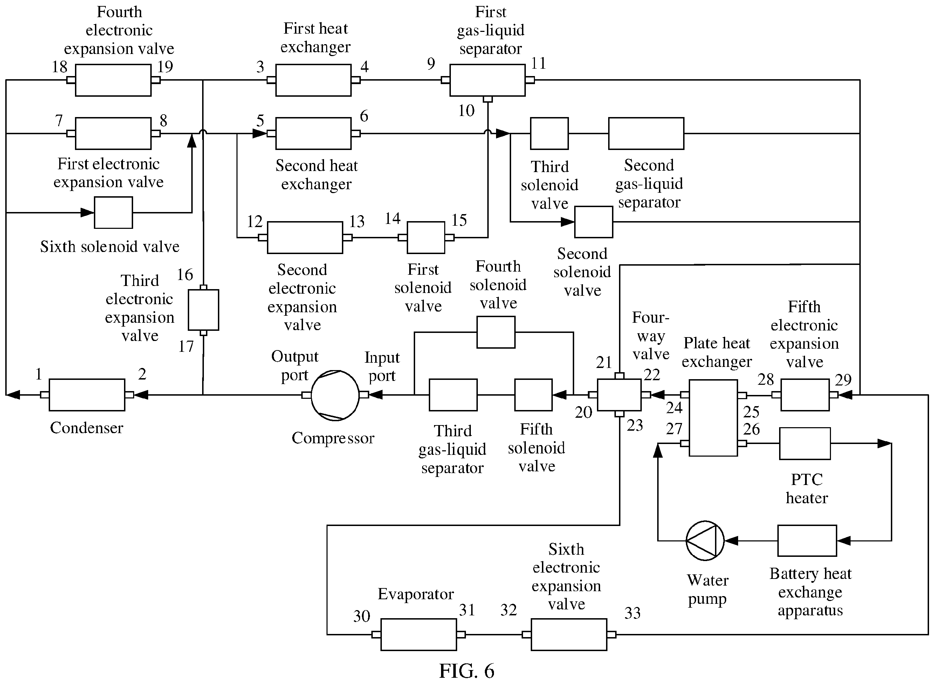

As shown in FIG. 6, the refrigerant in a high-temperature high-pressure gas state output from the output port of the compressor flows, through the condenser and the sixth solenoid valve, into the second heat exchanger through the fifth interface of the second heat exchanger. The refrigerant in the high-temperature high-pressure gas state releases heat to the environment at the second heat exchanger, changes to the refrigerant in a high-temperature high-pressure liquid state, and flows out from the sixth interface of the second heat exchanger. That is, in this case, the second heat exchanger is configured as a condenser. Then, the refrigerant in the high-temperature high-pressure liquid state flows through the second solenoid valve and the fifth electronic expansion valve, and becomes the refrigerant in a low-temperature low-pressure two-phase state. Then, the refrigerant in the low-temperature low-pressure two-phase state flows into the plate heat exchanger from the twenty-fifth interface of the plate heat exchanger. In this case, the plate heat exchanger absorbs heat generated by the battery, transfers the heat to the refrigerant in the low-temperature low-pressure two-phase state that flows through, and changes the refrigerant in the low-temperature low-pressure two-phase state into the refrigerant in a low-temperature low-pressure gas state. The refrigerant in the low-temperature low-pressure gas state flows out from the twenty-fourth interface of the plate heat exchanger, and then flows, through the twenty-second interface and the twentieth interface of the four-way valve, the fifth solenoid valve, and the third gas-liquid separator in sequence, into the compressor from the input port of the compressor, to complete the circulation process of the refrigerant in the fifth mode.

The following describes a manner in which the plate heat exchanger absorbs the heat generated by the battery.

In a first circulation process, the coolant flowing out from the water pump flows in from the twenty-seventh interface of the plate heat exchanger, and flows out from the twenty-sixth interface of the plate heat exchanger. In this case, the coolant does not absorb the heat generated by the battery. Then, the coolant flows through the PTC heater and the battery heat exchange apparatus, absorbs heat generated by the battery at the battery heat exchange apparatus, and finally flows back to the water pump, to complete the first circulation process of the coolant.

In a circulation process after the first circulation, the coolant flowing out from the water pump flows into the plate heat exchanger from the twenty-seventh interface, transfers the heat absorbed from the battery heat exchange apparatus to the plate heat exchanger, and then flows out from the twenty-sixth interface of the plate heat exchanger. A subsequent circulation process is the same as the first circulation process.

Sixth mode: (where the passenger cabin is cooled)
In the sixth mode, the first controller controls the following apparatuses to be in an enabled state:
the second solenoid valve, the fifth solenoid valve, the sixth solenoid valve, the sixth electronic expansion valve, and the twentieth interface and the twenty-third interface of the four-way valve.

In addition, the first controller controls the flap at the condenser to be disabled, so that the condenser does not perform heat exchange, that is, the condenser only performs a conduction function in this case.

The first controller controls the following apparatuses to be in a disabled state:
the first electronic expansion valve, the second electronic expansion valve, the third electronic expansion valve, the fourth electronic expansion valve, the fifth electronic expansion valve, the first solenoid valve, the third solenoid valve, the fourth solenoid valve, the PTC heater, and the water pump.

The following describes a circulation process of the refrigerant in the sixth mode.

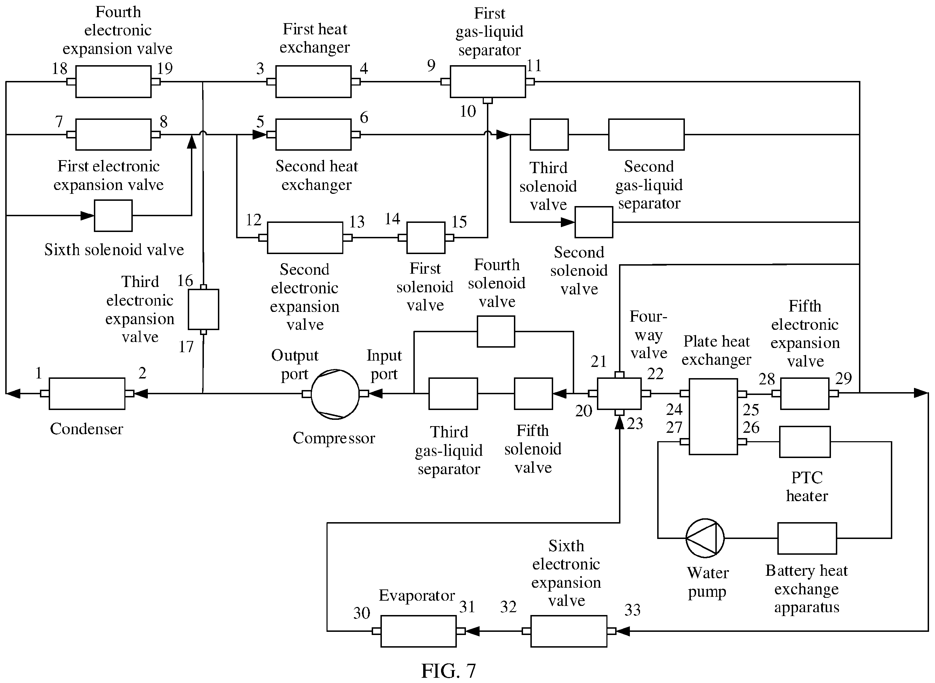

As shown in FIG. 7, the refrigerant in a high-temperature high-pressure gas state output from the output port of the compressor flows, through the condenser and the sixth solenoid valve, into the second heat exchanger through the fifth interface of the second heat exchanger. The refrigerant in the high-temperature high-pressure gas state releases heat to the environment at the second heat exchanger, changes to the refrigerant in a high-temperature high-pressure liquid state, and flows out from the sixth interface of the second heat exchanger. That is, in this case, the second heat exchanger is configured as a condenser. Then, the refrigerant in the high-temperature high-pressure liquid state flows through the second solenoid valve and the sixth electronic expansion valve, and becomes the refrigerant in a low-temperature low-pressure two-phase state. Then, the refrigerant in the low-temperature low-pressure two-phase state flows into the evaporator from the thirty-first interface of the evaporator, becomes the refrigerant in a low-temperature low-pressure gas state, and flows out from the thirtieth interface of the evaporator. That is, the evaporator absorbs heat inside a vehicle. Then, the refrigerant in the low-temperature low-pressure gas state flows, through the twenty-third interface and the twentieth interface of the four-way valve, the fifth solenoid valve, and the third gas-liquid separator in sequence, into the compressor from the input port of the compressor, to complete the circulation process of the refrigerant in the sixth mode.

Seventh mode: (where the passenger cabin and the battery are simultaneously cooled)
In the seventh mode, the first controller controls the following apparatuses to be in an enabled state:
the second solenoid valve, the sixth solenoid valve, the fifth solenoid valve, the fifth electronic expansion valve, the sixth electronic expansion valve, and the twentieth interface, the twenty-second interface, and the twenty-third interface of the four-way valve.

In addition, the first controller controls the flap at the condenser to be disabled, so that the condenser does not perform heat exchange, that is, the condenser only performs a conduction function in this case. The first controller controls the PTC heater, so that the PTC heater performs only a conduction function.

The first controller controls the following apparatuses to be in a disabled state:
the first electronic expansion valve, the second electronic expansion valve, the third electronic expansion valve, the fourth electronic expansion valve, the first solenoid valve, the third solenoid valve, and the fourth solenoid valve.

The following describes a circulation process of the refrigerant in the seventh mode.

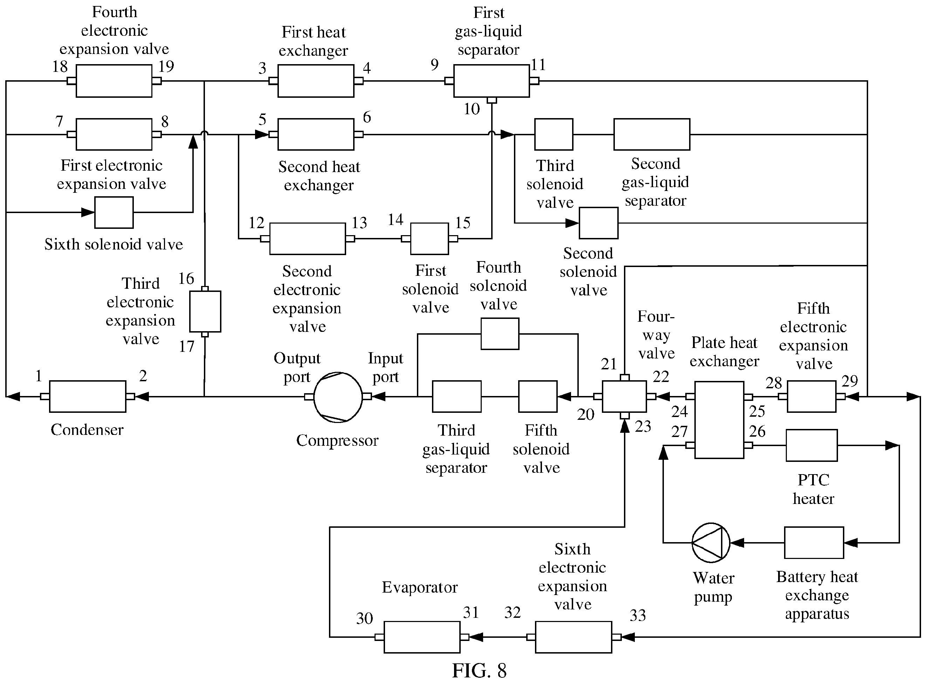

As shown in FIG. 8, the refrigerant in a high-temperature high-pressure gas state output from the output port of the compressor flows, through the condenser and the sixth solenoid valve, into the second heat exchanger through the fifth interface of the second heat exchanger. The refrigerant in the high-temperature high-pressure gas state releases heat to the environment at the second heat exchanger, changes to the refrigerant in a high-temperature high-pressure liquid state, and flows out from the sixth interface of the second heat exchanger. That is, in this case, the second heat exchanger is configured as a condenser. Then, the refrigerant in the high-temperature high-pressure liquid state flows through the second solenoid valve, flows out from the second solenoid valve, and is divided into two channels, which are denoted as a third channel of refrigerant and a fourth channel of refrigerant.

The third channel of refrigerant flows through the sixth electronic expansion valve, and becomes the refrigerant in a low-temperature low-pressure two-phase state. Then, the refrigerant in the low-temperature low-pressure two-phase state flows into the evaporator from the thirty-first interface of the evaporator, becomes the refrigerant in a low-temperature low-pressure gas state, and flows out from the thirtieth interface of the evaporator. That is, the evaporator absorbs heat inside the vehicle. Then, the refrigerant in the low-temperature low-pressure gas state flows, through the twenty-third interface and the twentieth interface of the four-way valve, the fifth solenoid valve, and the third gas-liquid separator in sequence, into the compressor from the input port of the compressor, to complete a circulation process of the third channel of refrigerant in the seventh mode.

The fourth channel of refrigerant flows through the fifth electronic expansion valve, and becomes the refrigerant in a low-temperature low-pressure two-phase state. Then, the refrigerant in the low-temperature low-pressure two-phase state flows into the plate heat exchanger from the twenty-fifth interface of the plate heat exchanger. In this case, the plate heat exchanger absorbs heat generated by the battery, transfers the heat to the refrigerant in the low-temperature low-pressure two-phase state that flows through, and changes the refrigerant in the low-temperature low-pressure two-phase state into the refrigerant in a low-temperature low-pressure gas state. The refrigerant in the low-temperature low-pressure gas state flows out from the twenty-fourth interface of the plate heat exchanger, and then flows, through the twenty-second interface and the twentieth interface of the four-way valve, the fifth solenoid valve, and the third gas-liquid separator in sequence, into the compressor from the input port of the compressor, to complete a circulation process of the fourth channel of refrigerant in the seventh mode.

A manner in which the plate heat exchanger absorbs heat generated by the battery in the seventh mode is the same as that in the sixth mode, and details are not described herein.

It should be understood that the thermal management system provided in this application may be further applicable to any other vehicle that runs by using an electric drive, and is not limited to an electric vehicle. This is not specifically limited in this application.

A person of ordinary skill in the art may be aware that, in combination with the examples described in embodiments disclosed in this specification, units and algorithm steps may be implemented by electronic hardware or a combination of computer software and electronic hardware. Whether functions are performed by hardware or software depends on particular applications and design constraints of the technical solutions.

When the functions are implemented in a form of a software function unit and sold or used as an independent product, the functions may be stored in a computer-readable storage medium. Based on such an understanding, the technical solutions of this application essentially, or the part contributing to conventional technologies, or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that may store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this invention as defined in the appended claims.

## Claims

1. A thermal management system, comprising:
a compressor, comprising an input port and an output port, wherein the compressor is configured to: compress a refrigerant input from the input port, and output the compressed refrigerant through the output port;
a condenser, comprising a first interface (1) and a second interface (2), wherein the second interface (2) is connected to the output port;
a first heat exchanger, comprising a third interface (3) and a fourth interface (4), wherein the third interface (3) is connected to the output port, and the fourth interface (4) is connected to the input port;
a second heat exchanger, comprising a fifth interface (5) and a sixth interface (6), wherein the sixth interface (6) is connected to the input port; and
a first electronic expansion valve, comprising a seventh interface (7) and an eighth interface (8), wherein the seventh interface (7) is connected to the first interface (1), and the eighth interface (8) is connected to the fifth interface (5);
wherein the thermal management system further comprises:
a first gas-liquid separator, comprising a ninth interface (9), a tenth interface (10), and an eleventh interface (11), wherein the ninth interface (9) is connected to the fourth interface (4), the tenth interface (10) is connected to the fifth interface (5), and the eleventh interface (11) is connected to the input port; and
the tenth interface (10) is a liquid output port of the first gas-liquid separator.

2. The thermal management system according to claim 1, wherein the thermal management system further comprises:
a second electronic expansion valve, comprising a twelfth interface (12) and a thirteenth interface (13), wherein the twelfth interface (12) is connected to the fifth interface (5), and the thirteenth interface (13) is connected to the tenth interface (10).

3. The thermal management system according to claim 2, wherein the thermal management system further comprises:
a first solenoid valve, comprising a fourteenth interface (14) and a fifteenth interface (15), wherein the fourteenth interface (14) is connected to the thirteenth interface (13), and the fifteenth interface (15) is connected to the tenth interface (10).

4. The thermal management system according to any one of claims 1 to 3, wherein the thermal management system further comprises:
a third electronic expansion valve, comprising a sixteenth interface (16) and a seventeenth interface (17), wherein the sixteenth interface (16) is connected to the third interface (3), and the seventeenth interface (17) is connected to the output port.

5. The thermal management system according to any one of claims 1 to 4, wherein
in a first direction, the first heat exchanger is in an upstream location of the second heat exchanger, and the first direction is an air flowing direction.

6. The thermal management system according to claim 5, wherein
the thermal management system further comprises:
a fan, configured to enable air to flow in the first direction.

7. The thermal management system according to any one of claims 1 to 6, wherein the thermal management system further comprises:
a fourth electronic expansion valve, comprising an eighteenth interface (18) and a nineteenth interface (19), wherein the eighteenth interface (18) is connected to the first interface (1), and the nineteenth interface (19) is connected to the third interface (3).

8. The thermal management system according to any one of claims 1 to 7, wherein the thermal management system further comprises:
a first controller, wherein
in a first mode, the first controller is configured to: control the first electronic expansion valve, the second electronic expansion valve, the third electronic expansion valve, and the first solenoid valve to be enabled, and control the fourth electronic expansion valve to be disabled, wherein the first mode is a mode in which defrosting is performed and a passenger cabin is heated.

9. The thermal management system according to claim 8, wherein
in a second mode, the first controller is configured to control the first electronic expansion valve, the second electronic expansion valve, the third electronic expansion valve, and the first solenoid valve to be disabled, and control the fourth electronic expansion valve to be enabled, wherein the second mode is a mode in which the passenger cabin is heated.

10. A method for controlling a thermal management system, wherein the thermal management system comprises:
a compressor, comprising an input port and an output port, wherein the compressor is configured to: compress a refrigerant input from the input port, and output a compressed refrigerant through the output port;
a condenser, comprising a first interface (1) and a second interface (2), wherein the second interface (2) is connected to the output port;
a first heat exchanger, comprising a third interface (3) and a fourth interface (4), wherein the third interface (3) is connected to the output port, and the fourth interface (4) is connected to the input port;
a second heat exchanger, comprising a fifth interface (5) and a sixth interface (6), wherein the sixth interface (6) is connected to the input port; and
a first electronic expansion valve, comprising a seventh interface (7) and an eighth interface (8), wherein the seventh interface (7) is connected to the first interface (1), and the eighth interface (8) is connected to the fifth interface (5); and
the method comprises:
receiving a first instruction; and
controlling, based on the first instruction, the first electronic expansion valve to be enabled;
wherein the thermal management system further comprises:
a first gas-liquid separator, comprising a ninth interface (9), a tenth interface (10), and an eleventh interface (11), wherein the ninth interface (9) is connected to the fourth interface (4), the tenth interface (10) is connected to the fifth interface (5), and the eleventh interface (11) is connected to the input port; and
the tenth interface (10) is a liquid output port of the first gas-liquid separator, and the eleventh interface (11) is a gas output port of the first gas-liquid separator; and
a second electronic expansion valve, comprising a twelfth interface (12) and a thirteenth interface (13), wherein the twelfth interface (12) is connected to the fifth interface (5), and the thirteenth interface (13) is connected to the tenth interface (10); and
the method further comprises:
controlling, based on the first instruction, the second electronic expansion valve to be enabled.

11. The method according to claim 10, wherein
the thermal management system further comprises:
a first solenoid valve, comprising a fourteenth interface (14) and a fifteenth interface (15), wherein the fourteenth interface (14) is connected to the thirteenth interface (13), and the fifteenth interface (15) is connected to the tenth interface (10); and
the method further comprises:
controlling, based on the first instruction, the first solenoid valve to be enabled.

12. A vehicle, comprising the thermal management system according to any one of claims 1 to 9.

13. A computer-readable storage medium, comprising a computer program or instructions, wherein when the computer program or the instructions are run on a computer, the computer is enabled to perform the method according to any one of claims 10 to 11.

## Patentansprüche

1. Wärmeverwaltungssystem, umfassend:
einen Kompressor, der einen Eingangsanschluss und einen Ausgangsanschluss umfasst, wobei der Kompressor zu Folgendem konfiguriert ist: Komprimieren eines Kältemittels, das von dem Eingangsanschluss eingegeben wird, und Ausgeben des komprimierten Kältemittels durch den Ausgangsanschluss;
einen Kondensator, der eine erste Schnittstelle (1) und eine zweite Schnittstelle (2) umfasst, wobei die zweite Schnittstelle (2) mit dem Ausgangsanschluss verbunden ist;
einen ersten Wärmetauscher, der eine dritte Schnittstelle (3) und eine vierte Schnittstelle (4) umfasst, wobei die dritte Schnittstelle (3) mit dem Ausgangsanschluss verbunden ist und die vierte Schnittstelle (4) mit dem Eingangsanschluss verbunden ist;
einen zweiten Wärmetauscher, der eine fünfte Schnittstelle (5) und eine sechste Schnittstelle (6) umfasst, wobei die sechste Schnittstelle (6) mit dem Eingangsanschluss verbunden ist; und ein erstes elektronisches Expansionsventil, das eine siebte Schnittstelle (7) und eine achte Schnittstelle (8) umfasst, wobei die siebte Schnittstelle (7) mit der ersten Schnittstelle (1) verbunden ist und die achte Schnittstelle (8) mit der fünften Schnittstelle (5) verbunden ist;
wobei das Wärmeverwaltungssystem ferner Folgendes umfasst:
einen ersten Gas-Flüssigkeits-Abscheider, der eine neunte Schnittstelle (9), eine zehnte Schnittstelle (10) und eine elfte Schnittstelle (11) umfasst, wobei die neunte Schnittstelle (9) mit der vierten Schnittstelle (4) verbunden ist, die zehnte Schnittstelle (10) mit der fünften Schnittstelle (5) verbunden ist und die elfte Schnittstelle (11) mit dem Eingangsanschluss verbunden ist; und
die zehnte Schnittstelle (10) ein Flüssigkeitsausgangsanschluss des ersten Gas-Flüssigkeits-Abscheiders ist.

2. Wärmeverwaltungssystem nach Anspruch 1, wobei das Wärmeverwaltungssystem ferner Folgendes umfasst:
ein zweites elektronisches Expansionsventil, das eine zwölfte Schnittstelle (12) und eine dreizehnte Schnittstelle (13) umfasst, wobei die zwölfte Schnittstelle (12) mit der fünften Schnittstelle (5) verbunden ist und die dreizehnte Schnittstelle (13) mit der zehnten Schnittstelle (10) verbunden ist.

3. Wärmeverwaltungssystem nach Anspruch 2, wobei das Wärmeverwaltungssystem ferner Folgendes umfasst:
ein erstes Magnetventil, das eine vierzehnte Schnittstelle (14) und eine fünfzehnte Schnittstelle (15) umfasst, wobei die vierzehnte Schnittstelle (14) mit der dreizehnten Schnittstelle (13) verbunden ist und die fünfzehnte Schnittstelle (15) mit der zehnten Schnittstelle (10) verbunden ist.

4. Wärmeverwaltungssystem nach einem der Ansprüche 1 bis 3, wobei das Wärmeverwaltungssystem ferner Folgendes umfasst:
ein drittes elektronisches Expansionsventil, das eine sechzehnte Schnittstelle (16) und eine siebzehnte Schnittstelle (17) umfasst, wobei die sechzehnte Schnittstelle (16) mit der dritten Schnittstelle (3) verbunden ist und die siebzehnte Schnittstelle (17) mit dem Ausgangsanschluss verbunden ist.

5. Wärmeverwaltungsverfahren nach einem der Ansprüche 1 bis 4,
wobei
sich der erste Wärmetauscher in einer ersten Richtung an einer stromaufwärts gelegenen Stelle des zweiten Wärmetauschers befindet und die erste Richtung eine Luftströmungsrichtung ist.

6. Wärmeverwaltungssystem nach Anspruch 5, wobei
das Wärmeverwaltungssystem ferner Folgendes umfasst:
einen Lüfter, der dazu konfiguriert ist, es zu ermöglichen, dass Luft in die erste Richtung strömt.

7. Wärmeverwaltungssystem nach einem der Ansprüche 1 bis 6, wobei das Wärmeverwaltungssystem ferner Folgendes umfasst:
ein viertes elektronisches Expansionsventil, das eine achtzehnte Schnittstelle (18) und eine neunzehnte Schnittstelle (19) umfasst, wobei die achtzehnte Schnittstelle (18) mit der ersten Schnittstelle (1) verbunden ist und die neunzehnte Schnittstelle (19) mit der dritten Schnittstelle (3) verbunden ist.

8. Wärmeverwaltungssystem nach einem der Ansprüche 1 bis 7, wobei das Wärmeverwaltungssystem ferner Folgendes umfasst:
eine erste Steuerung, wobei
die erste Steuerung in einem ersten Modus zu Folgendem konfiguriert ist: Steuern des ersten elektronischen Expansionsventils, des zweiten elektronischen Expansionsventils, des dritten elektronischen Expansionsventils und des ersten Magnetventils, so dass sie aktiviert werden, und Steuern des vierten elektronischen Expansionsventils, so dass es deaktiviert wird, wobei der erste Modus ein Modus ist, in dem ein Entfrosten durchgeführt und eine Fahrgastkabine beheizt wird.

9. Wärmeverwaltungssystem nach Anspruch 8, wobei
die erste Steuerung in einem zweiten Modus dazu konfiguriert ist, das erste elektronische Expansionsventil, das zweite elektronische Expansionsventil, das dritte elektronische Expansionsventil und das erste Magnetventil so zu steuern, dass sie deaktiviert werden, und das vierte elektronische Expansionsventil so zu steuern, dass es aktiviert wird, wobei der zweite Modus ein Modus ist, in dem die Fahrgastkabine beheizt wird.

10. Verfahren zum Steuern eines Wärmeverwaltungssystems, wobei
das Wärmeverwaltungssystem Folgendes umfasst:
einen Kompressor, der einen Eingangsanschluss und einen Ausgangsanschluss umfasst, wobei der Kompressor zu Folgendem konfiguriert ist: Komprimieren eines Kältemittels, das von dem Eingangsanschluss eingegeben wird, und Ausgeben eines komprimierten Kältemittels durch den Ausgangsanschluss;
einen Kondensator, der eine erste Schnittstelle (1) und eine zweite Schnittstelle (2) umfasst, wobei die zweite Schnittstelle (2) mit dem Ausgangsanschluss verbunden ist;
einen ersten Wärmetauscher, der eine dritte Schnittstelle (3) und eine vierte Schnittstelle (4) umfasst, wobei die dritte Schnittstelle (3) mit dem Ausgangsanschluss verbunden ist und die vierte Schnittstelle (4) mit dem Eingangsanschluss verbunden ist;
einen zweiten Wärmetauscher, der eine fünfte Schnittstelle (5) und eine sechste Schnittstelle (6) umfasst, wobei die sechste Schnittstelle (6) mit dem Eingangsanschluss verbunden ist; und ein erstes elektronisches Expansionsventil, das eine siebte Schnittstelle (7) und eine achte Schnittstelle (8) umfasst, wobei die siebte Schnittstelle (7) mit der ersten Schnittstelle (1) verbunden ist und die achte Schnittstelle (8) mit der fünften Schnittstelle (5) verbunden ist; und
das Verfahren Folgendes umfasst:
Empfangen einer ersten Anweisung; und
Steuern, basierend auf der ersten Anweisung, des ersten elektronischen Expansionsventils, so dass es aktiviert wird;
wobei das Wärmeverwaltungssystem ferner Folgendes umfasst:
einen ersten Gas-Flüssigkeits-Abscheider, der eine neunte Schnittstelle (9), eine zehnte Schnittstelle (10) und eine elfte Schnittstelle (11) umfasst, wobei die neunte Schnittstelle (9) mit der vierten Schnittstelle (4) verbunden ist, die zehnte Schnittstelle (10) mit der fünften Schnittstelle (5) verbunden ist und die elfte Schnittstelle (11) mit dem Eingangsanschluss verbunden ist; und
die zehnte Schnittstelle (10) ein Flüssigkeitsausgangsanschluss des ersten Gas-Flüssigkeits-Abscheiders ist und die elfte Schnittstelle (11) ein Gasausgangsanschluss des ersten Gas-Flüssigkeits-Abscheiders ist; und
ein zweites elektronisches Expansionsventil, das eine zwölfte Schnittstelle (12) und eine dreizehnte Schnittstelle (13) umfasst, wobei die zwölfte Schnittstelle (12) mit der fünften Schnittstelle (5) verbunden ist und die dreizehnte Schnittstelle (13) mit der zehnten Schnittstelle (10) verbunden ist; und
wobei das Verfahren ferner Folgendes umfasst:
Steuern, basierend auf der ersten Anweisung, des zweiten elektronischen Expansionsventils, so dass es aktiviert wird.

11. Verfahren nach Anspruch 10, wobei
das Wärmeverwaltungssystem ferner Folgendes umfasst:
ein erstes Magnetventil, das eine vierzehnte Schnittstelle (14) und eine fünfzehnte Schnittstelle (15) umfasst, wobei die vierzehnte Schnittstelle (14) mit der dreizehnten Schnittstelle (13) verbunden ist und die fünfzehnte Schnittstelle (15) mit der zehnten Schnittstelle (10) verbunden ist; und
wobei das Verfahren ferner Folgendes umfasst:
Steuern, basierend auf der ersten Anweisung, des ersten Magnetventils, so dass es aktiviert wird.

12. Fahrzeug, umfassend das Wärmeverwaltungssystem nach einem der Ansprüche 1 bis 9.

13. Computerlesbares Speichermedium, umfassend ein Computerprogramm oder Anweisungen, wobei, wenn das Computerprogramm oder die Anweisungen auf einem Computer ausgeführt werden, der Computer in die Lage versetzt wird, das Verfahren nach einem der Ansprüche 10 bis 11 durchzuführen.

## Revendications

1. Système de gestion thermique, comprenant :
un compresseur, comprenant un port d'entrée et un port de sortie, le compresseur étant configuré pour : comprimer un réfrigérant entrant depuis le port d'entrée, et faire sortir le réfrigérant comprimé par le port de sortie ;
un condensateur, comprenant une première interface (1) et une seconde interface (2), dans lequel la seconde interface (2) est connectée au port de sortie ;
un premier échangeur de chaleur, comprenant une troisième interface (3) et une quatrième interface (4), dans lequel la troisième interface (3) est connectée au port de sortie, et la quatrième interface (4) est connectée au port d'entrée ;
un deuxième échangeur de chaleur, comprenant une cinquième interface (5) et une sixième interface (6), dans lequel la sixième interface (6) est connectée au port d'entrée ; et
une première vanne d'expansion électronique, comprenant une septième interface (7) et une huitième interface (8), dans lequel la septième interface (7) est connectée à la première interface (1), et la huitième interface (8) est connectée à la cinquième interface (5) ;
dans lequel le système de gestion thermique comprend également : un premier séparateur gaz-liquide, comprenant une neuvième interface (9), une dixième interface (10) et une onzième interface (11), dans lequel la neuvième interface (9) est connectée à la quatrième interface (4), la dixième interface (10) est connectée à la cinquième interface (5) et la onzième interface (11) est connectée au port d'entrée ; et
la dixième interface (10) est un port de sortie de liquide du premier séparateur gaz-liquide.

2. Système de gestion thermique selon la revendication 1, dans lequel le système de gestion thermique comprend également :
une deuxième vanne d'expansion électronique, comprenant une douzième interface (12) et une treizième interface (13), dans lequel la douzième interface (12) est connectée à la cinquième interface (5), et la treizième interface (13) est connectée à la dixième interface (10).

3. Système de gestion thermique selon la revendication 2, dans lequel le système de gestion thermique comprend également :
une première électrovanne, comprenant une quatorzième interface (14) et une quinzième interface (15), dans lequel la quatorzième interface (14) est connectée à la treizième interface (13), et la quinzième interface (15) est connectée à la dixième interface (10).

4. Système de gestion thermique selon l'une quelconque des revendications 1 à 3, dans lequel le système de gestion thermique comprend également :
une troisième vanne d'expansion électronique, comprenant une seizième interface (16) et une dix-septième interface (17), dans lequel la seizième interface (16) est connectée à la troisième interface (3), et la dix-septième interface (17) est connectée au port de sortie.

5. Système de gestion thermique selon l'une quelconque des revendications 1 à 4, dans lequel
dans une première direction, le premier échangeur de chaleur est dans un emplacement en amont du deuxième échangeur de chaleur, et la première direction est une direction d'écoulement d'air.

6. Système de gestion thermique selon la revendication 5, dans lequel
le système de gestion thermique comprend également :
un ventilateur, configuré pour permettre à l'air de circuler dans la première direction.

7. Système de gestion thermique selon l'une quelconque des revendications 1 à 6, dans lequel le système de gestion thermique comprend également :
une quatrième vanne d'expansion électronique, comprenant une dix-huitième interface (18) et une dix-neuvième interface (19), dans lequel la dix-huitième interface (18) est connectée à la première interface (1), et la dix-neuvième interface (19) est connectée à la troisième interface (3).

8. Système de gestion thermique selon l'une quelconque des revendications 1 à 7, dans lequel le système de gestion thermique comprend également :
un premier contrôleur, dans lequel
dans un premier mode, le premier contrôleur est configuré pour : commander l'activation de la première vanne d'expansion électronique, de la deuxième vanne d'expansion électronique, de la troisième vanne d'expansion électronique et de la première électrovanne, et commander la désactivation de la quatrième vanne d'expansion électronique, dans lequel le premier mode étant un mode dans lequel un dégivrage est effectué et une cabine passagers est chauffée.

9. Système de gestion thermique selon la revendication 8, dans lequel
dans un deuxième mode, le premier contrôleur est configuré pour commander l'activation de la première vanne d'expansion électronique, de la deuxième vanne d'expansion électronique, de la troisième vanne d'expansion électronique et de la première électrovanne, et commander la désactivation de la quatrième vanne d'expansion électronique, dans lequel le premier mode est un mode dans lequel un dégivrage est effectué et une cabine passagers est chauffée.

10. Procédé de commande d'un système de gestion thermique, dans lequel le système de gestion thermique comprend :
un compresseur, comprenant un port d'entrée et un port de sortie, dans lequel le compresseur est configuré pour : comprimer un réfrigérant entrant depuis le port d'entrée, et faire sortir le réfrigérant comprimé par le port de sortie ;
un condensateur, comprenant une première interface (1) et une seconde interface (2), dans lequel la seconde interface (2) est connectée au port de sortie ;
un premier échangeur de chaleur, comprenant une troisième interface (3) et une quatrième interface (4), dans lequel la troisième interface (3) est connectée au port de sortie, et la quatrième interface (4) est connectée au port d'entrée ;
un deuxième échangeur de chaleur, comprenant une cinquième interface (5) et une sixième interface (6), dans lequel la sixième interface (6) est connectée au port d'entrée ; et
une première vanne d'expansion électronique, comprenant une septième interface (7) et une huitième interface (8), dans lequel la septième interface (7) est connectée à la première interface (1), et la huitième interface (8) est connectée à la cinquième interface (5) ; et
le procédé comprend :
la réception d'une première instruction ; et
la commande, sur la base de la première instruction, du premier vanne d'expansion électronique à activer ;
dans lequel le système de gestion thermique comprend également : un premier séparateur gaz-liquide, comprenant une neuvième interface (9), une dixième interface (10) et une onzième interface (11), dans lequel la neuvième interface (9) est connectée à la quatrième interface (4), la dixième interface (10) est connectée à la cinquième interface (5) et la onzième interface (11) est connectée au port d'entrée ; et
la dixième interface (10) est un orifice de sortie de liquide du premier séparateur gaz-liquide, et la onzième interface (11) est un orifice de sortie de gaz du premier séparateur gaz-liquide ; et
une deuxième vanne d'expansion électronique, comprenant une douzième interface (12) et une treizième interface (13), dans lequel la douzième interface (12) est connectée à la cinquième interface (5), et la treizième interface (13) est connectée à la dixième interface (10) ; et
le procédé comprend également :
la commande, sur la base de la première instruction, du deuxième vanne d'expansion électronique à activer.

11. Procédé selon la revendication 10, dans lequel le système de gestion thermique comprend également :
une première électrovanne, comprenant une quatorzième interface (14) et une quinzième interface (15), dans lequel la quatorzième interface (14) est connectée à la treizième interface (13), et la quinzième interface (15) est connectée à la dixième interface (10) ; et
le procédé comprend également :
la commande, en fonction de la première instruction, de la première électrovanne à activer.

12. Véhicule, comprenant le système de gestion thermique selon l'une quelconque des revendications 1 à 9.

13. Support de stockage lisible par ordinateur, comprenant des instructions, dans lequel, lorsque les instructions sont exécutées sur un ordinateur, l'ordinateur est activé pour réaliser le procédé selon l'une quelconque des revendications 10 à 11.
